# EUROPEAN PATENT APPLICATION

(11) **EP 2 579 163 A1**
(43) Date of publication of application: **10.04.2013**
(21) Application number: 11789831.2
(22) Date of filing: 31.05.2011
(51) Int. Cl.: G06F 13/00, G06F 12/00

(54) **INFORMATION APPLIANCE DATA CONNECTION SYSTEM, AUTHENTICATION DEVICE, CLIENT APPLIANCE, INFORMATION APPLIANCE DATA CONNECTION METHOD AND STORAGE MEDIUM**

(30) Priority: 31.05.2010 JP 2010123739
(71) Applicant: NEC Corporation, Tokyo 108-8001 (JP)
(72) Inventor: ISHIZUKA Yukari, Tokyo 108-8001 (JP)
(74) Representative: Vossius & Partner
(86) International application number: PCT/JP2011/062545
(87) International publication number: WO 2011/152428

(57) **Abstract**

An authenticator (11) of a mobile terminal (1) determines whether or not network identification information acquired from a PC terminal (4) matches network specifying information stored in a memory (13). If it is determined that these are matched, a selector (12) selects a client appliance that reproduces or executes the content stored in the memory (13). A communicator (14) transmits the content to the selected client appliance. An authenticator (41) of the PC terminal (4) determines whether or not the server identification information acquired from the mobile terminal (1) matches server specifying information stored in a memory (43). If it is determined that these are matched, an acquirer (42) acquires content that is transmitted to the PC terminal. A player (44) reproduces the content and outputs to a display (45). In a similar manner, an audio instrument (5) and a television (6) also acquire and reproduce the content that is transmitted to the audio instrument (5) and television (6).

## Description

### Technical Field

The present invention relates to an information appliance data connection system, an authentication device, a client appliance, an information appliance data connection method and a recording medium.

### Background Art

DLNA (Digital Living Network Alliance) is an economic organization formed by manufacturers of, for example, AV electrical household appliances and electrical equipment, PC (Personal Computer), PC peripherals, and mobile computing devices. DLNA is intended to makes guidelines (industry standards) by which products of each company are compatible with each other, and can easily interconnect with each other on a home network (hereinafter, referred to as the network). The appliances in compliance with this guideline (hereinafter, referred to as the appliances in compliance with DLNA) can be easily connected to each other through a network, even if the manufacturers or models differ. Therefore, it is possible to utilize content, such as a moving image, still picture, music, and so on, stored in other appliances in compliance with DLNA, using an appliance in compliance with DLNA.

A mobile terminal which functions as the appliance in compliance with DLNA transmits and receives the content by interconnecting with other appliances in compliance with DLNA. Generally, a manner for communication between the mobile terminal and other appliances is not limited to a communication method through a base station. For example, the mobile terminal directly communicates with other appliances in compliance with the manner of wireless LAN (Local Area Network) or Bluetooth, or performs a direct communication with another appliance using a contactless IC card (hereinafter, referred to as contactless IC card communication). This communication is realized by an application stored in the mobile terminal (see, Patent Literatures 1 to 4).

### Prior Art Documents

### Patent Literature

Patent Literature 1: Unexamined Japanese Patent Application Kokai Publication No. 2003-032175
Patent Literature 2: Unexamined Japanese Patent Application Kokai Publication No. 2003-032176
Patent Literature 3: Unexamined Japanese Patent Application Kokai Publication No. 2003-032261
Patent Literature 4: Unexamined Japanese Patent Application Kokai Publication No. 2005-339206

### Disclosure of the Invention

### Problems to be Solved by the Invention

The mobile terminal has many opportunities carried outside a network. Therefore, the opportunity of the mobile terminal to provide content, such as a moving image, to a network also increases. In this case, a user utilizes the mobile terminal as a DLNA server (server appliance) in a home. However, the user needs to activate a server application manually each time it is used, and to select an opposite appliance connected to the mobile terminal. Therefore, the mobile terminal which functions as the server appliance is inconvenient.

Moreover, the cellular phone and PC which constitute the communication system described in the Patent Literatures 1 to 4 do not constitute a network. Therefore, in cases where these cellular phones are operated as server appliances, the cellular phones and so on are inconvenient. That is, these communication systems do not connect the mobile terminal to the network automatically, and do not make the content transmitted to a client appliance from the mobile terminal.

The present invention is made in view of the above circumstances, and an object thereof is to connect a mobile terminal which functions as a server appliance automatically to a network, and make a client appliance process content simply.

### Means for Solving the Problems

An information appliance data connection system according to a first aspect of the present invention includes:
a server appliance;
a client appliance connected to the server appliance via a network;
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether or not the server appliance identification information received by the first receiver and the server appliance specifying information matches substantially, and notifies determination result to the client appliance,
wherein the server appliance includes:
a second memory which stores content and the server appliance identification information;
a first transmitter which transmits the server appliance identification information to the first receiver; and
a second transmitter which transmits the content to the client appliance,
wherein the client appliance includes:
a second receiver which receives, in response to a notification from the first determiner, the content from the server appliance which includes the server appliance identification information, in cases where it is determined that the server appliance identification information and the server appliance specifying information match substantially; and
an outputter which processes the content received by the second receiver.

An authentication device according to a second aspect of the present invention is an authentication device connected to a server appliance via a network, and includes:
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether or not the server appliance identification information received by the first receiver and the server appliance specifying information matches substantially, and notifies determination result to a client appliance which receives content from the server appliance transmitting the server appliance identification information.

A client appliance according to a third aspect of the present invention is a client appliance connected to a server appliance via a network, and includes:
a first receiver which receives content from the server appliance which includes the server appliance identification information, in cases where it is determined that the server appliance identification information and the server appliance specifying information match substantially, in response to a notification from an authentication device which has determined that server appliance identification information for identifying the server appliance and server appliance specifying information representing an apparatus set as the server appliance in advance match substantially; and
an outputter which processes the content received by the first receiver.

An information appliance data connection method according to a fourth aspect of the present invention includes:
a step of setting at least one mobile terminal among a plurality of mobile terminals as a server appliance;
a storing step which stores content and server appliance identification information for identifying the server appliance in the mobile terminal set as the server appliance;
a first transmission step which transmits the server appliance identification information from the server appliance before a client appliance receives the content transmitted from the server appliance;
a first receiving step which receives the server appliance identification information transmitted from the server appliance;
a step of determining whether or not received server appliance identification information and server appliance specifying information for specifying the mobile terminal set as the server appliance among the plurality of mobile terminals in advance matches substantially, and notifying determination result to the client appliance;
a second transmission step which transmits the content to the client appliance from the server appliance;
a second receiving step which receives the content in the client appliance, in response to notified determination result, when transmission source of the content is the mobile terminal set in advance as the server appliance; and
a step of processing received content in the client appliance.

A recording medium according to a fifth aspect of the present invention is a recording medium recording a program which causes a computer connected to a server appliance via a network to execute an authentication process, wherein the program causes the computer to function as:
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether or not the server appliance identification information received by the first receiver and the server appliance specifying information matches substantially, and notifies determination result to a client appliance which receives content from the server appliance transmitting the server appliance identification information.

### Effects of the Invention

As an exemplary advantage according to the present invention, it is possible to connect a mobile terminal which functions as a server appliance automatically to a network, and make a client appliance process content simply.

### Brief Description of Drawings

FIG. 1 is a block diagram illustrating a configuration example of a network according to an exemplary embodiment;
FIG. 2 is a block diagram illustrating a configuration example of an information appliance data connection system according to the exemplary embodiment;
FIG. 3 is a flowchart illustrating operation of a mobile terminal according to the exemplary embodiment;
FIG. 4 is a flowchart illustrating operation of a PC terminal according to the exemplary embodiment; and
FIG. 5 is a block diagram illustrating hardware structures of the mobile terminal and the PC terminal according to the exemplary embodiment.

### Exemplary Embodiment

In the present exemplary embodiment, a server appliance is a mobile terminal on a network. The server appliance stores content(s) acquired from outside of a network. The server appliance causes a client appliance to process the content (for example, reproduction or execution), by transmitting the stored content to the client appliance. Normal operation states of the server appliance include a state where it is connected to the network, and a state where it is disconnected from the network. The server appliance includes a function to easily establish and terminate a connection with the network (such as a wireless communication, a contactless IC card communication). When an appliance on the network detects information for identifying the server appliance (such as a card ID of the contactless IC card), the appliance starts a communication with the server appliance (a communication other than the contactless IC card communication).

The client appliance is an apparatus on the network and processes the content received from the server appliance (for example, reproduction or execution). The content is data which a user makes the client appliance reproduce, or a script and a program in which instructions for operating the client appliance are described and so on.

Server appliance specifying information is information for specifying an apparatus which the user set as the server appliance in advance. Network specifying information is information for specifying the network connected to the server appliance. The network specifying information is set by the user in advance.

Hereinafter, the present exemplary embodiment will be described in detail with reference to drawings. The identical reference numeral is given to an identical or equivalent part in the drawings.

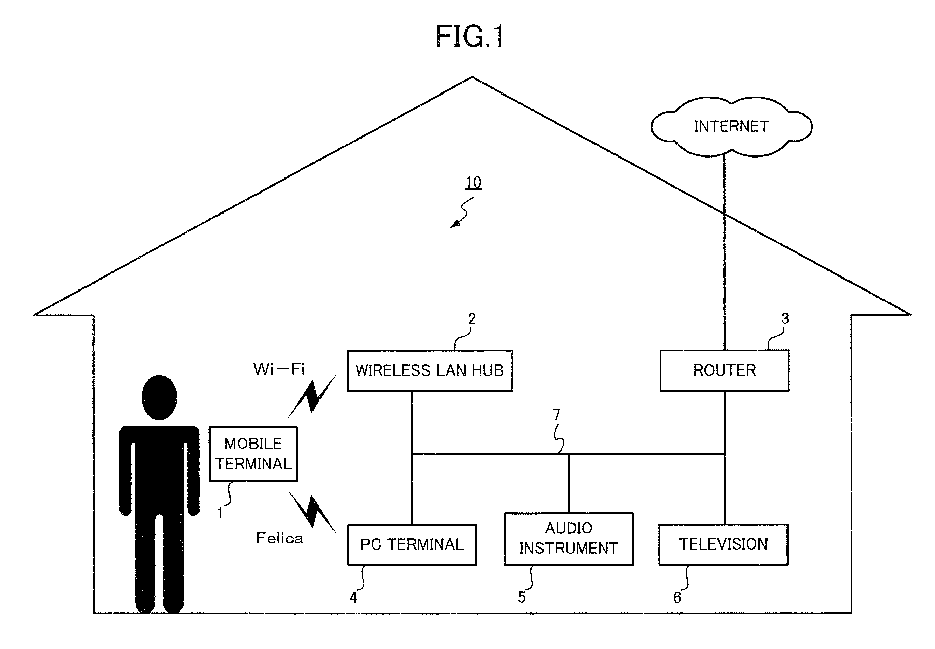

A network 10 according to the present exemplary embodiment includes a mobile terminal 1, a wireless LAN hub 2, a router 3, a PC terminal 4, an audio instrument 5, and a television 6, as illustrated in FIG. 1. All apparatuses that constitute the network 10 are DLNA compatible apparatuses. The wireless LAN hub 2, the router 3, the PC terminal 4, the audio instrument 5, and the television 6 are connected each other through a home LAN 7.

Moreover, the mobile terminal 1 and the wireless LAN hub 2 perform a wireless communication (for example, Wi-Fi). Whereby, the mobile terminal 1 is connected to the home LAN 7 through the wireless LAN hub 2. Moreover, the mobile terminal 1 and the PC terminal 4 can communicate each other using the contactless IC card (for example, Felica).

The server appliance which provides content, such as a still picture and an moving image, to the DLNA compatible apparatuses is called as a digital media server (DMS). In the present exemplary embodiment, the mobile terminal 1 corresponds to the DMS. Moreover, the client appliance, which receives content from the DMS and reproduces or executes the content, is called as a digital media player (DMP). In the present exemplary embodiment, the PC terminal 4, the audio instrument 5, and the television 6 correspond to the DMP.

In the present exemplary embodiment, the PC terminal 4 includes the function of the contactless IC card communication, but it is not limited to this constitution. For example, the network 10 may be provided with a dedicated apparatus for the contactless IC card communication. Moreover, the audio instrument 5 or the television 6 may include the function of the contactless IC card communication.

Although the mobile terminal 1, the PC terminal 4, the audio instrument 5, and the television 6 are illustrated with one set, respectively, a plurality of mobile terminals 1, PC terminals 4, audio instruments 5, and televisions 6 may be connected. A DLNA compatible apparatus other than the PC terminal 4, the audio instrument 5 and television 6 may constitute the network 10 as the client appliance. Furthermore, the mobile terminal 1 (the server appliance) and the DLNA compatible apparatus (the client appliance) may be provided with one set, respectively.

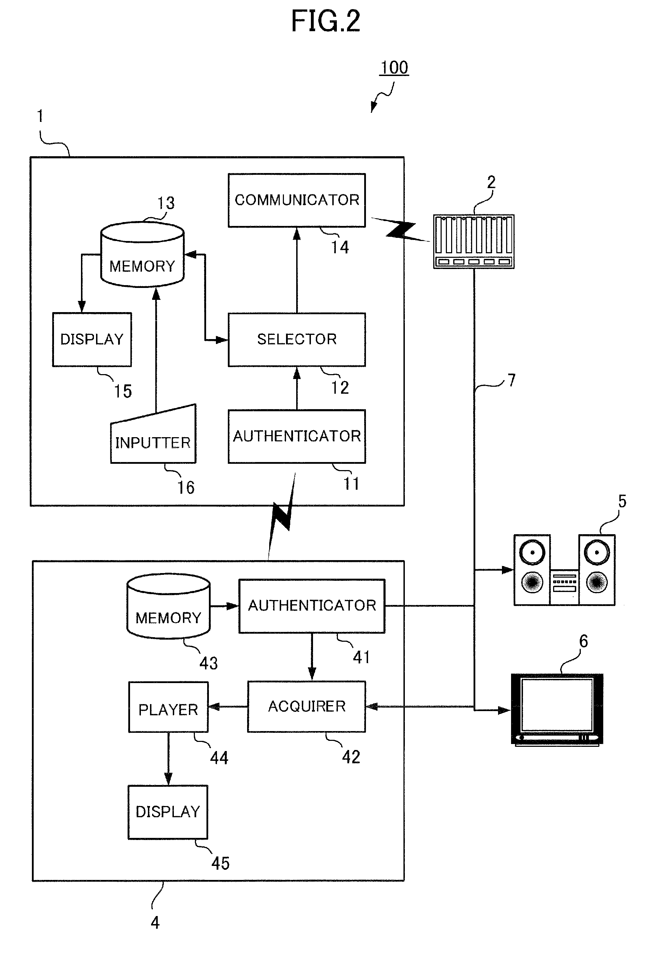

The information appliance data connection system 100 is constituted by the mobile terminal 1, the wireless LAN hub 2, the PC terminal 4, the audio instrument 5, and the television 6, as illustrated in FIG. 2.

The mobile terminal 1 includes an authenticator 11, a selector 12, a memory 13, a communicator 14, a display 15, and an inputter 16.

The contactless IC card (Felica) is built into the authenticator 11. The PC terminal 4 is provided with a contactless IC card reader/writer which can write or read various kinds of information to/from the contactless IC card. The PC terminal 4 and the mobile terminal 1 perform not only a communication through the wireless LAN hub 2 but also the contactless IC card communication through the electromagnetic wave radiated from the contactless IC card reader/writer. The mobile terminal 1 receives network identification information by the contactless IC card communication, in cases where the user causes the mobile terminal 1 to approach the PC terminal 4. The network identification information is for identifying the network connected to the PC terminal 4 (such as a host name, an IP address and a MAC address). The authenticator 11 activates a server application, in cases where the received network identification information matches the network specifying information.

When the authenticator 11 has activated the server application, the selector 12 acquires content from the memory 13. The selector 12, in accordance with the data attribute of the content, selects a client appliance on the network 10, the client appliance being caused to reproduce or execute the content. The data attribute includes a structure of data which specifies the meaning of data, for example, in accordance with a position, and a coding manner representing how data is expressed. The data attribute may be represented by an extension. In this case, the selector 12 selects the PC terminal 4 and the audio instrument 5 for the music data when the extension is mp3, wav and so on, selects the PC terminal 4 and the television 6 for the video data when the extension is avi, mpeg and so on, and selects the PC terminal 4 for data to which other extension are given. If one mobile terminal 1 (server appliance) and one DLNA compatible apparatus (client appliance) are provided, it is unnecessary to have the selector 12.

The memory 13 stores the content which the user owns, the network specifying information set by the user, and the application program and so on.

When the authenticator 11 has activated a server application, the communicator 14 automatically connects to the wireless LAN hub 2 by the wireless communication (Wi-Fi). The communicator 14 transmits the content through the wireless LAN hub 2 to the client appliance selected by the selector 12.

The display 15 displays a screen for setting the content and setting the network.

The inputter 16 receives content setting and network setting. Instead of receiving the setting by the inputter 16, the mobile terminal 1 may receive the content setting and client appliance settings by synchronizing with an external apparatus using Bluetooth.

The PC terminal 4 includes an authenticator 41, an acquirer 42, a memory 43, a player 44, and a display 45.

The authenticator 41 radiates electromagnetic waves periodically from the contactless IC card reader/writer. The authenticator 41 receives IC card identification information for identifying the mobile terminal 1 through the electromagnetic waves.
This IC card identification information is stored in the contactless IC card built in the mobile terminal 1. The authenticator 41 activates the client application in cases where the received IC card identification information matches the server appliance specifying information.
Moreover, the authenticator 41 transmits activation information to the audio instrument 5 and the television 6, the activation information representing that the received IC card identification information matches the server appliance specifying information. It should be noted that the term "match" herein is not limited to a perfect matching. If the server appliance identified by the server appliance identification information, and the apparatus specified by the server appliance specifying information have a relationship by which it can be determined and identified that both apparatuses are identical, it corresponds to "match" herein.

When the authenticator 41 has activated the client application, the acquirer 42 connects to the mobile terminal 1 through the home LAN 7. The acquirer 42 receives the content which is transmitted to the PC terminal 4 from the communicator 14, for example.

The memory 43 stores the server appliance specifying information set by the user, the application program and so on.

The player 44 reproduces the content received by the acquirer 42 and displays the content on the display 45 in accordance with the client application. Moreover, in cases where the content received by the acquirer 42 is script(s), the player 44 performs the script.

The display 45 displays the content and so on, which are reproduced or performed by the player 44, on a screen in accordance with the client application.

The audio instrument 5 and the television 6 activate the client application in cases where the activation information is received from the authenticator 41. When the client application has been activated, the audio instrument 5 and the television 6 connect to the mobile terminal 1 through the wireless LAN hub 2. The audio instrument 5 and the television 6 receive, for example, the content, which is transmitted to them respectively, from the mobile terminal 1. The audio instrument 5 and the television 6 include a display or a speaker.
The audio instrument 5 and the television 6 output the received content to the display or the speaker in accordance with the client application. Moreover, in cases where the received content is script, the audio instrument 5 and the television 6 perform the script.

The PC terminal 4, the audio instrument 5, and the television 6 may activate the client application only after they may receive the content which is transmitted to them respectively. In cases where the mobile terminal 1 is connected to the network 10 while reproducing the content, the PC terminal 4, the audio instrument 5, and the television 6 may activate the client application and synchronize the reproduction of content with the mobile terminal 1. That is, the mobile terminal 1 may transmit the content which is reproduced to each client appliance, and each client appliance may reproduce or execute the content simultaneously with the reproduction or execution by the mobile terminal 1, when buffering of the received content is completed. Alternatively, the mobile terminal 1 transmits current data of the content during reproduction to each client appliance in order, and each client appliance may also reproduce or execute the received data immediately.

Furthermore, the mobile terminal 1 may transmit the content, which was newly stored after disconnecting from the network 10 the last time, to the client appliance. In this case, the memory 13 stores information representing whether the content has been transmitted or not associated with the content. Alternatively, the memory 13 may store the last time when it is connected to the network 10, and the time at which the content is acquired, associated with the content. In this case, the communicator 14 transmits the content, the acquired time of the content being after the last time when it is connected to the network 10.

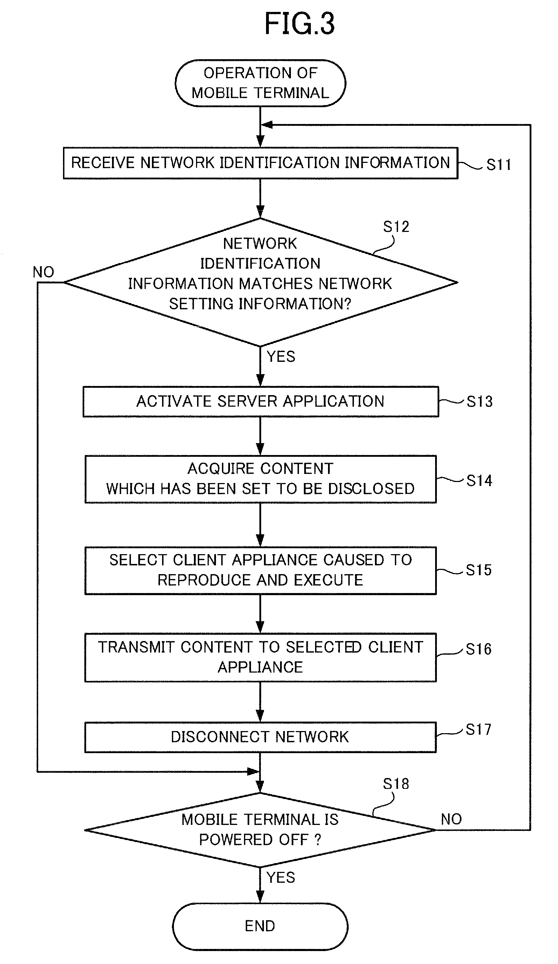

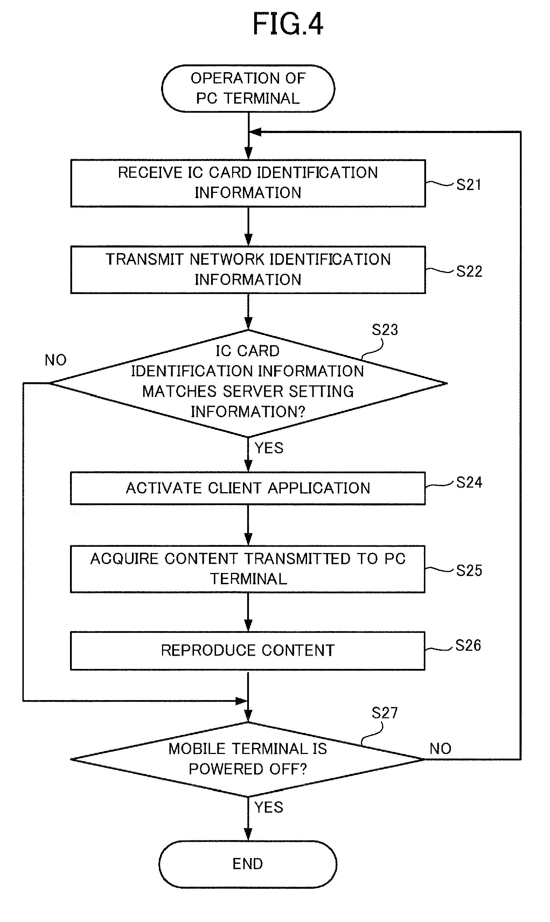

Next, with reference to FIG. 3 and FIG. 4, the operation of the information appliance data connection system 100 which includes the above-described constitution is described, in order of the operation of the mobile terminal 1 and the operation of the PC terminal 4. First, the operation of the mobile terminal 1 is described with reference to the flowchart of FIG. 3. When the mobile terminal 1 approaches the PC terminal 4, the authenticator 11 receives the network identification information from the PC terminal 4 (step S11). The authenticator 11 determines whether the acquired network identification information matches the network specifying information (step S12). In cases where it is determined that the network identification information matches the network specifying information (step S12; YES), the authenticator 11 activates the server application (step S13).

When the server application has been activated, the selector 12 acquires the content, which is set to be disclosed by the user, from the memory 13 (step S14). Next, the selector 12 selects the client appliance on the network to cause the client appliance to reproduce or execute the content (step S 15). The communicator 14 transmits the content to the selected client appliance through the wireless LAN hub 2 (step S16). When the transmission has been completed, the communicator 14 disconnects from the network (step S17). Next, the authenticator 11 discriminates whether or not the mobile terminal 1 is powered off (step S 18).
In cases where it is determined that the mobile terminal 1 is not powered off (step S18; NO), the processes of step S 11 through step S 18 are repeated. In cases where it is determined that the mobile terminal 1 is powered off (step S18; YES), the process is finished.

In cases where it is determined that, on the other hand, the received network identification information does not match the network specifying information (step S12; NO), the authenticator 11 determines whether or not the mobile terminal 1 is powered off (step S 18). In cases where it is determined that the mobile terminal 1 is not powered off (step S18; NO), the processes of step S11 through step S18 are repeated. On the other hand, in cases where it is determined that the mobile terminal 1 is powered off (step S18; YES), the process is finished.

Next, referring to the flowchart illustrated in FIG. 4, the operation of the PC terminal 4 is described. When the mobile terminal 1 approaches the PC terminal 4, the authenticator 41 receives the IC card identification information from the mobile terminal 1 (step S21).
When the authenticator 41 has received the IC card identification information, the authenticator 41 transmits the network identification information to the mobile terminal 1 (step S22). Moreover, the authenticator 41 determines whether or not the received IC card identification information matches the server specifying information (step S23). In cases where it is determined that the received IC card identification information matches the server specifying information (step S23; YES), the authenticator 41 activates the client application (step S24).

When the client application has been activated, the acquirer 42 acquires the content transmitted to the PC terminal 4 through the wireless LAN hub 2 (step S25). Next, the player 44 reproduces the content concerned and causes the display 45 to display the content (step S26). After that, the authenticator 41 determines whether or not the PC terminal 4 is powered off (step 27). In cases where it is determined that the power supply is not off (step S27; NO), the processes of step S21 through step S27 are repeated. In cases where it is determined that the power supply is off (step S27; YES), the process is finished.

In cases where it is determined that, on the other hand, the received IC card identification information does not match the server specifying information (step S23; NO), the authenticator 41 determines whether or not the PC terminal is powered off (step S27). In cases where it is determined that it is not powered off (step S27; NO), the processes of step S21 through step S27 are repeated. In cases where it is determined that it is powered off (step S27; YES), the process is finished.

As described above, according to the information appliance data connection system 100 in the present exemplary embodiment, it is possible to automatically connect the mobile terminal 1, which functions as the server appliance, to the network 10. Moreover, the mobile terminal 1 can cause the client appliance to reproduce or execute the content easily. The mobile terminal 1 automatically selects the appliance according to the type of content. Furthermore, the mobile terminal 1 can cause the selected appliance to reproduce or execute the content easily.

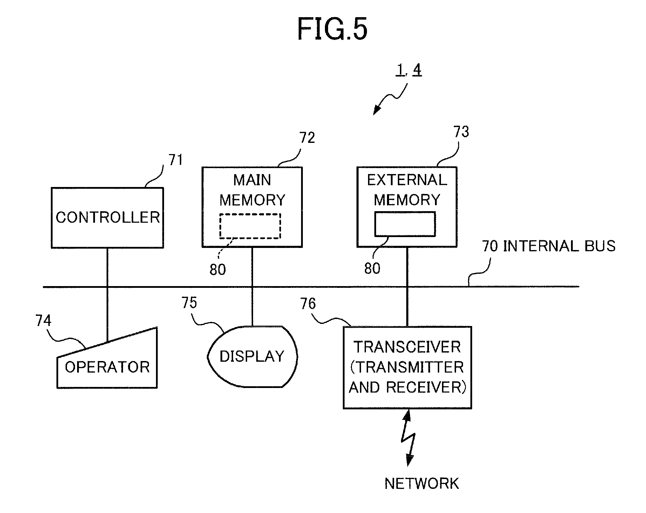

Arbitrary hardware structures can be used for the mobile terminal 1 and the PC terminal 4, in so far as those can realize the above-described functions. Hereinafter, an example of the hardware structures of the mobile terminal 1 and the PC terminal 4 is described with reference to FIG. 5. Each of the mobile terminal 1 and the PC terminal 4 includes a controller 71, a main memory 72, an external memory 73, an operator 74, a display 75, and a transceiver 76, as illustrated in FIG. 5. The main memory 72, the external memory 73, the operator 74, the display 75, and the transceiver 76 are connected to the controller 71 through an internal bus 70.

The controller 71 is constituted by a CPU (Central Processing Unit) or the like, and executes various kinds of processes in accordance with a control program 80 stored in the external memory 73. In the case of the mobile terminal 1, the controller 71 executes each process which the authenticator 11, the selector 12, and the communicator 14 execute. In the case of the PC terminal 4, the controller 71 executes each process which the authenticator 41, the acquirer 42, and the player 44 execute.

The main memory 72 is constituted by a RAM (Random-Access Memory) or the like, loads the control program 80 stored in the external memory 73, and is used as a work area by the controller 71.

The external memory 73 is constituted by a nonvolatile memory, such as a flash memory, a hard disk, DVD-RAM (Digital Versatile Disc Random-Access Memory), and DVD-RW (Digital Versatile Disc ReWritable). The external memory 73 stores beforehand the program for causing the controller 71 to perform the processes of the mobile terminal 1 or the PC terminal 4. Moreover, the external memory 73 provides the data stored by the program to the controller 71 in accordance with instructions from the controller 71, and stores the data provided from the controller 71. In the case of the mobile terminal 1, the memory 13 is constituted by the external memory 73. In the case of the PC terminal 4, the memory 43 is constituted by the external memory 73.

The operator 74 is constituted by a keyboard and a pointing device such as a mouse, and an interface which connects the keyboard, the pointing device and the like to the internal bus 70. In cases where the user performs a server appliance setting and a network setting, the instructions from the user are provided to the controller 71 through the operator 74. In the case of the mobile terminal 1, the operator 74 functions as the inputter 16.

The display 75 is constituted by a CRT (Cathode Ray Tube), an LCD (Liquid Crystal Display) or the like. The display 75 displays an operation screen, for example, in cases where the user performs the server appliance setting and the network setting. In the case of the mobile terminal 1, the display 75 functions as the display 15. In the case of the PC terminal 4, the display 75 functions as the display 45.

The transceiver 76 is constituted by a network terminator or a radio communication device to connect with the network, and a serial interface or a LAN (Local Area Network) interface connected thereto. In the case of the mobile terminal 1, the transceiver 76 connects to the PC terminal 4 by the contactless IC card communication and connects to the wireless LAN hub 2 by the wireless communication. In the case of the PC terminal 4, the transceiver 76 connects to the mobile terminal 1 by the contactless IC card communication, and functions as the acquirer 42 connected to the home LAN 7.

Each process of the authenticator 11, the selector 12, the memory 13 and the communicator 14 of the mobile terminal 1 illustrated in FIG. 2, and each process of the authenticator 41, the acquirer 42, and the player 44 of the PC terminal 4 are executed by the control program 80 using the controller 71, the main memory 72, the external memory 73, the operator 74, the display 75, the transceiver 76 and so on as resources.

In addition, the hardware structure and flowchart described above are only an example, and arbitrary modification and correction can be made.

In the above-mentioned exemplary embodiment, the PC terminal 4 includes the memory 43 and the authenticator 41, but it is not necessarily limited to this example. For example, an authentication apparatus connected to the network may be constituted by components which have the similar functions as the memory 43 and the authenticator 41. In this case, the authentication apparatus outputs authentication result to the acquirer of the PC terminal 4. Moreover, the PC terminal 4 can be constituted so that the memory 43 and the authenticator 41 are omitted.

The main parts which performs the processes of information appliance data connection system 100 constituted by the controller 71, the main memory 72, the external memory 73, the operator 74, the internal bus 70 and so on can be achieved using a general computer system, other than using a dedicated hardware. The information appliance data connection system 100 which executes the above-described processes may be constituted, for example, by recording the computer program for executing the above-described operation into a computer readable recording medium (such as a flexible disk, CD-ROM, DVD) to distribute the recording medium, and installing the program into a computer. Alternatively, the information appliance data connection system 100 may be constituted so that the general computer system downloads the computer program, the computer program concerned being stored in advance in the memory storage included in a server device on a communication network such as Internet.

Moreover, in cases where the functions of the information appliance data connection system are realized by sharing by OS (operating system) and the application program or by a cooperation with OS and the application program, only an application program may be stored in a recording medium or a memory storage.

Moreover, it is also possible to superimpose the computer program on a carrier wave to distribute it through a communication network. For example, the computer program may be places on the bulletin board system (BBS) on the communication network, and may be distributed through the communication network. The system may be constituted so that the above-described processes can be executed, by activating this computer program and executing the program as well as other application programs under a control of OS.

A part of or all of above-described exemplary embodiments would also be described as the following supplementary notes, but it is not limited to following description.

### (supplementary note 1)

An information appliance data connection system comprising:
a server appliance;
a client appliance connected to the server appliance via a network;
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether the server appliance identification information received by the first receiver and the server appliance specifying information matches substantially, and notifies determination result to the client appliance,
wherein the server appliance includes:
   a second memory which stores content and the server appliance identification information;
   a first transmitter which transmits the server appliance identification information to the first receiver; and
   a second transmitter which transmits the content to the client appliance,
wherein the client appliance includes:
   a second receiver which receives, in response to a notification from the first determiner, the content from the server appliance which includes the server appliance identification information, in cases where it is determined that the server appliance identification information and the server appliance specifying information match substantially; and
   an outputter which processes the content received by the second receiver.

### (supplementary note 2)

The information appliance data connection system according to supplementary note 1, wherein
the server appliance includes a contactless IC card which stores the server appliance identification information,
the first transmitter transmits the server appliance identification information using a contactless IC card communication, in cases where the server appliance approaches an apparatus connected to the network,
the first receiver receives the server appliance identification information using the contactless IC card communication,
the second transmitter transmits the content to the client appliance through the network connected by a wireless communication, and
the second receiver receives the content through the network.

### (supplementary note 3)

The information appliance data connection system according to supplementary note 1 or 2, wherein
the information appliance data connection system comprises a plurality of client appliances,
the server appliance includes a generator which selects the client appliance suited for the content based on data attribute of the content and generates object apparatus information representing selected client appliance, and
the second transmitter transmits the content to the selected client appliance based on the object apparatus information.

### (supplementary note 4)

The information appliance data connection system according to any one of supplementary notes 1 to 3, wherein
the first memory stores network identification information for identifying the network,
the second memory stores the network specifying information for specifying the network set as the network connected to the server appliance,
the server appliance includes:
a third receiver which receives the network identification information; and
a second determiner which determines whether or not the network identification information received by the third receiver and the network specifying information match substantially,
the second transmitter transmits the content to the client appliance in cases where the second determiner has determined that the network identification information and the network specifying information match substantially.

### (supplementary notes 5)

The information appliance data connection system according to any one of supplementary notes 1 to 4, wherein
the content is data during process in the server appliance,
the client appliance synchronizes with the server appliance in cases where the first determiner has determined that the server appliance identification information and the server appliance specifying information matches substantially, and
the outputter processes the content simultaneously with the process of the data by the server appliance.

### (supplementary note 6)

The information appliance data connection system according to any one of supplementary notes 1 to 5, wherein
the second transmitter transmits to the client appliance the content which is stored by the second memory later than the last time when the server appliance connected with the network.

### (supplementary note 7)

An authentication device connected to a server appliance via a network comprising:
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether the server appliance identification information received by the first receiver and the server appliance specifying information matches substantially, and notifies determination result to a client appliance which receives the content from the server appliance transmitting the server appliance identification information.

### (supplementary note 8)

A client appliance connected to a server appliance via a network comprising:
a first receiver which receives the content from the server appliance which includes the server appliance identification information, in cases where it is determined that the server appliance identification information and the server appliance specifying information match substantially, in response to a notification from an authentication device which has determined that server appliance identification information for identifying the server appliance and server appliance specifying information representing an apparatus set as the server appliance in advance match substantially; and
an outputter which processes the content received by the first receiver.

### (supplementary note 9)

An information appliance data connection method including:
a step of setting at least one mobile terminal among a plurality of mobile terminals as a server appliance;
a storing step which stores content and server appliance identification information for identifying the server appliance in the mobile terminal set as the server appliance;
a first transmission step which transmits the server appliance identification information from the server appliance before a client appliance receives the content transmitted from the server appliance;
a first receiving step which receives the server appliance identification information transmitted from the server appliance;
a step of determining whether received server appliance identification information and server appliance specifying information for specifying the mobile terminal set as the server appliance among the plurality of mobile terminals in advance matches substantially, and notifying determination result to the client appliance;
a second transmission step which transmits the content to the client appliance from the server appliance;
a second receiving step which receives the content in the client appliance, in response to notified determination result, when transmission source of the content is the mobile terminal set in advance as the server appliance; and
a step of processing received content in the client appliance.

### (supplementary note 10)

The information appliance data connection method according to supplementary note 9, wherein
the first transmission step transmits the server appliance identification information using a contactless IC card communication, in cases where the server appliance, which includes a contactless IC card which stores the server appliance identification information, approaches an apparatus connected to the network,
the first receiving step receives the server appliance identification information using the contactless IC card communication,
the second transmission step transmits the content to the client appliance through the network connected by a wireless communication, and
the second receiving step receives the content through the network.

### (supplementary note 11)

The information appliance data connection method according to supplementary note 9 or 10, further including
a generation step which selects the client appliance suited for the content, among a plurality of client appliances connected to the server appliance through the network, based on data attribute of the content, and generates object apparatus information representing selected client appliance, and
the second transmission step transmits the content to the selected client appliance based on the object apparatus information.

### (supplementary note 12)

A recording medium recording a program which causes a computer connected to a server appliance via a network to execute an authentication process, wherein the program causes the computer to function as:
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether the server appliance identification information received by the first receiver and the server appliance specifying information matches substantially, and notifies determination result to a client appliance which receives the content from the server appliance transmitting the server appliance identification information.

This application is based on Japan patent application No. 2010-123739 filed on May 21, 2010. The entire disclosure of the specification, claims and drawings of the Japan patent application No. 2010-123739 is incorporated by reference herein.

### Industrial Applicability

The present invention is suitable for a home network including a mobile terminal which functions as a server appliance.

### Description of Reference Numerals

- 1: Mobile terminal
- 2: Wireless LAN hub
- 3: Router
- 4: PC terminal
- 5: Audio instrument
- 6: Television
- 7: Home LAN
- 10: Network
- 11: Authenticator
- 12: Selector
- 13: Memory
- 14: Communicator
- 15: Display
- 16: Inputter
- 41: Authenticator
- 42: Acquirer
- 43: Memory
- 44: Player
- 45: Display
- 70: Internal bus
- 71: Controller
- 72: Main memory
- 73: External memory
- 74: Operator
- 75: Display
- 76: Transceiver
- 80: Control program
- 100: Information appliance data connection system

## Claims

1. An information appliance data connection system comprising:
a server appliance;
a client appliance connected to the server appliance via a network;
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether or not the server appliance identification information received by the first receiver and the server appliance specifying information matches substantially, and notifies determination result to the client appliance,
wherein the server appliance includes:
a second memory which stores content and the server appliance identification information;
a first transmitter which transmits the server appliance identification information to the first receiver; and
a second transmitter which transmits the content to the client appliance,
wherein the client appliance includes:
a second receiver which receives, in response to a notification from the first determiner, the content from the server appliance which includes the server appliance identification information, in cases where it is determined that the server appliance identification information and the server appliance specifying information match substantially; and
an outputter which processes the content received by the second receiver.

2. The information appliance data connection system according to claim 1, wherein the server appliance includes a contactless IC card which stores the server appliance identification information,
the first transmitter transmits the server appliance identification information using a contactless IC card communication, in cases where the server appliance approaches an apparatus connected to the network,
the first receiver receives the server appliance identification information using the contactless IC card communication,
the second transmitter transmits the content to the client appliance through the network connected by a wireless communication, and
the second receiver receives the content through the network.

3. The information appliance data connection system according to claim 1 or 2, wherein
the information appliance data connection system comprises a plurality of client appliances, the server appliance includes a generator which selects the client appliance suited for the content based on data attribute of the content and generates object apparatus information representing selected client appliance, and
the second transmitter transmits the content to the selected client appliance based on the object apparatus information.

4. The information appliance data connection system according to any one of claims 1 to 3, wherein
the first memory stores network identification information for identifying the network, the second memory stores the network specifying information for specifying the network set as the network connected to the server appliance,
the server appliance includes:
a third receiver which receives the network identification information; and
a second determiner which determines whether or not the network identification information received by the third receiver and the network specifying information match substantially,
the second transmitter transmits the content to the client appliance in cases where the second determiner has determined that the network identification information and the network specifying information match substantially.

5. The information appliance data connection system according to any one of claims 1 to 4, wherein
the content is data during process in the server appliance,
the client appliance synchronizes with the server appliance in cases where the first determiner has determined that the server appliance identification information and the server appliance specifying information matches substantially, and
the outputter processes the content simultaneously with the process of the data by the server appliance.

6. The information appliance data connection system according to any one of claims 1 to 5, wherein
the second transmitter transmits to the client appliance the content which is stored by the second memory later than the last time when the server appliance connected with the network.

7. An authentication device connected to a server appliance via a network comprising:
a first receiver which receives server appliance identification information for identifying the server appliance from the server appliance;
a first memory which stores server appliance specifying information for specifying the mobile terminals set as the server appliance among a plurality of mobile terminals; and
a first determiner which determines whether or not the server appliance identification information received by the first receiver and the server appliance specifying information matches substantially, and notifies determination result to a client appliance which receives content from the server appliance transmitting the server appliance identification information.

8. A client appliance connected to a server appliance via a network comprising:
a first receiver which receives content from the server appliance which includes the server appliance identification information, in cases where it is determined that the server appliance identification information and the server appliance specifying information match substantially, in response to a notification from an authentication device which has determined that server appliance identification information for identifying the server appliance and server appliance specifying information representing an apparatus set as the server appliance in advance match substantially; and
an outputter which processes the content received by the first receiver.

9. An information appliance data connection method including:
a step of setting at least one mobile terminal among a plurality of mobile terminals as a server appliance;
a storing step which stores content and server appliance identification information for identifying the server appliance in the mobile terminal set as the server appliance;
a first transmission step which transmits the server appliance identification information from the server appliance before a client appliance receives the content transmitted from the server appliance;
a first receiving step which receives the server appliance identification information transmitted from the server appliance;
a step of determining whether or not received server appliance identification information and server appliance specifying information for specifying the mobile terminal set as the server appliance among the plurality of mobile terminals in advance matches substantially, and notifying determination result to the client appliance;
a second transmission step which transmits the content to the client appliance from the server appliance;
a second receiving step which receives the content in the client appliance, in response to notified determination result, when transmission source of the content is the mobile terminal set in advance as the server appliance; and
a step of processing received content in the client appliance.

10. A computer-readable recording medium recording a program which causes a computer connected to a server appliance via a network to execute an authentication process, wherein the program causes the computer to function as:
a first receiver which receives server appliance identification information for identifying the server appliance from the server appliance;
a first memory which stores server appliance specifying information for specifying the mobile terminal set as the server appliance among a plurality of mobile terminals; and
a first determiner which determines whether or not the server appliance identification information received by the first receiver and the server appliance specifying information matches substantially, and notifies determination result to a client appliance which receives content from the server appliance transmitting the server appliance identification information.
